# EUROPEAN PATENT APPLICATION

(11) **EP 4 138 023 A1**
(43) Date of publication of application: **22.02.2023**
(21) Application number: 21921627.2
(22) Date of filing: 25.06.2021
(51) Int. Cl.: G06Q 40/02, G06Q 50/00

(54) **RATING DETERMINATION SYSTEM, RATING DETERMINATION METHOD, AND PROGRAM**

(71) Applicant: Rakuten Group, Inc., Setagaya-ku Tokyo 158-0094 (JP)
(72) Inventor: ABROL, Satyen, Tokyo 158-0094 (JP); KONDAPAKA, Manoj, Tokyo 158-0094 (JP); SUGAWARA, Takashi, Tokyo 158-0094 (JP); UMEDA, Takashi, Tokyo 158-0094 (JP)
(74) Representative: Hoffmann Eitle
(86) International application number: PCT/JP2021/024215
(87) International publication number: WO 2022/269926

(57) **Abstract**

A credit determination system, a credit determination method, and a program capable of accurately determining credit of a person whose credit information is not known are provided. A relationship specifying unit (26) specifies a relationship between a target person and a reference person. A closeness score determining unit (28) determines a closeness score indicating closeness between the target person and the reference person in accordance with a determination criterion corresponding to the relationship between the target person and the reference person based on an index indicating strength of the relationship between the target person and the reference person. A credit determining unit (32) determines credit of the target person based on information about the at least one reference person and the closeness score determined for the reference person.

## Description

### Technical Field

The present invention relates to a credit determination system, a credit determination method, and a program.

### Background Art

Patent Literature 1 describes a technique for determining whether the outstanding amount of loan contracts included in the query result file is equal to or less than the maximum amount of loan defined in the Total Amount Regulations of the Money Lending Business Control and Regulation Law. Patent Literature 1 also describes that, in a case where each person in marriage concludes a loan contract and their outstanding amounts of loans are totaled, the upper limit of their total loans may be determined based on the upper limit set for the contractor with the higher income of the two, or on the sum of the upper limits set for two of them.

### Citation List

### Patent Literature

Patent Literature 1: JP2009-301236A

### Summary of Invention

### Technical Problem

In the technique described in Patent Literature 1, the above determination is performed based on the information on the loan contract registered in the credit information organization. As such, when determining the credit of a person using the technique described in Patent Literature 1, it is not possible to accurately determine the credit of the person without knowing the credit information of the person.

One or more embodiments of the present invention have been conceived in view of the above, and an object thereof is to provide a credit determination system, a credit determination method, and a program capable of accurately determining credit of a person whose credit information is not known.

### Solution to Problem

A credit determination system according to the present invention that determines credit of a target person includes relationship specifying means for specifying a relationship between the target person and a reference person, closeness score determining means for determining a closeness score indicating closeness between the target person and the reference person in accordance with a determination criterion corresponding to the relationship between the target person and the reference person based on an index indicating strength of the relationship between the target person and the reference person, and credit determining means for determining credit of the target person based on information about the at least one reference person and the closeness score determined for the reference person.

In one aspect of the present invention, the closeness score determining means determines the closeness score indicating the closeness between the target person and the reference person based on an output obtained when data indicating the index is entered into a trained machine learning model corresponding the relationship between the target person and the reference person.

In one aspect of the present invention, the relationship specifying means specifies the relationship between the target person and the reference person based on account data of the target person registered in a first computer system and account data of the reference person registered in a second computer system.

In one aspect of the present invention, the credit determination system further includes pair specifying means for specifying a pair of persons related to each other based on respective attributes of a plurality of persons, and reference person specifying means for specifying, as the reference person, a person who is specified as related to the target person and a person who is related to a predetermined number or more of persons related to the target person.

In one aspect of the present invention, the relationship specifying means specifies the relationship between the target person and the reference person as a family.

In one aspect of the present invention, the credit determining means determines a credit score of the target person.

In one aspect of the present invention, the relationship specifying means specifies the relationship between the target person and the reference person based on a result of clustering based on a value associated with a relationship between persons.

In this aspect, the relationship specifying means may specify the relationship between the target person and the reference person based on a result of clustering based on at least one of a surname, an IP address, an address, a credit card number, an age difference, or a gender.

In one aspect of the present invention, the credit determining means executes a first determination that determines credit of the target person based on information about the target person, and in a case where the credit of the target person determined by the first determination is equal to or less than a predetermined level or the credit of the target person is not determined by the first determination, the credit determining means executes a second determination that redetermines the credit of the target person based on information about the at least one reference person.

A credit determination method according to the present invention for determining credit of a target person includes specifying a relationship between the target person and a reference person, determining a closeness score indicating closeness between the target person and the reference person in accordance with a determination criterion corresponding to the relationship between the target person and the reference person based on an index indicating strength of the relationship between the target person and the reference person, and determining credit of the target person based on information about the at least one reference person and the closeness score determined for the reference person.

A program according to the present invention causes a computer that determines credit of a target person to execute specifying a relationship between the target person and a reference person, determining a closeness score indicating closeness between the target person and the reference person in accordance with a determination criterion corresponding to the relationship between the target person and the reference person based on an index indicating strength of the relationship between the target person and the reference person, and determining credit of the target person based on information about the at least one reference person and the closeness score determined for the reference person.

### Brief Description of the Drawings

FIG. 1 is a diagram illustrating an example of an overall configuration of a credit determination system according to an embodiment of the present invention;
FIG. 2 is a functional block diagram showing an example of functions of the credit determination system according to an embodiment of the present invention;
FIG. 3 is a schematic diagram illustrating an example of common IP address data values;
FIG. 4 is a diagram illustrating an example of graph data;
FIG. 5 is a schematic diagram illustrating an example of common address data values;
FIG. 6 is a diagram illustrating an example of graph data;
FIG. 7 is a schematic diagram illustrating an example of common credit card number data values;
FIG. 8 is a diagram illustrating an example of graph data;
FIG. 9 is a diagram illustrating an example of graph data;
FIG. 10 is a diagram illustrating an example of clusters;
FIG. 11 is a diagram showing an example of visualization of classification;
FIG. 12 is a diagram showing an example of determination of the closeness score using a machine learning model;
FIG. 13 is a diagram showing an example of learning of the machine learning model; and
FIG. 14 is a flow chart showing an example of processing executed in the credit determination system according to an embodiment of the present invention.

### Description of Embodiments

An embodiment of the present invention will be described below with reference to the accompanying drawings.

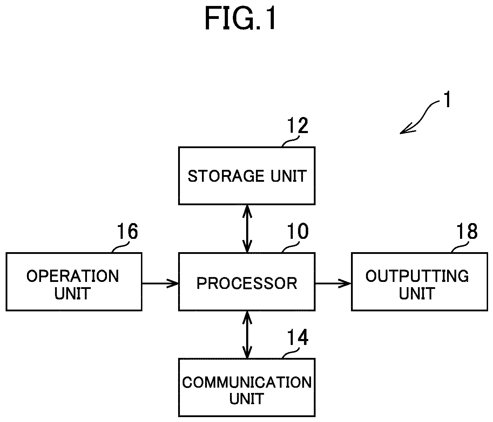

FIG. 1 is a diagram illustrating an example of an overall configuration of a credit determination system 1 according to an embodiment of the present invention. As shown in FIG. 1, the credit determination system 1 according to the present embodiment is a computer such as a server computer and a personal computer, and includes a processor 10, a storage unit 12, a communication unit 14, an operation unit 16, and an outputting unit 18. The credit determination system 1 according to the present embodiment may include a plurality of computers.

The processor 10 is, for example, a program control device such as a microprocessor operating in accordance with a program installed in the credit determination system 1. The storage unit 12 is, for example, storage elements such as a ROM and a RAM, and a solid-state drive (SSD). The storage unit 12 stores a program to be executed by the processor 10, for example. The communication unit 14 is a communication interface for wired or wireless communication, for example, and transfers data to and from another computer or terminal via a computer network, such as the Internet.

The operation unit 16 is an input device and includes, for example, a pointing device such as a touch panel and a mouse, and a keyboard. The operation unit 16 transmits operations to the processor 10. The output unit 18 is, for example, an output device of a display such as a liquid crystal display unit and an organic EL display unit, or an audio output device such as a speaker.

The programs and data described as being stored in the storage unit 12 may be supplied from other computers via the network. The hardware configuration of the credit determination system 1 is not limited to the above examples, and various types of hardware can be applied. For example, the credit determination system 1 may include a reading unit (e.g., an optical disk drive or a memory card slot) for reading a computer-readable information storage medium or an input/output unit (e.g., a USB port) for inputting/outputting data to/from an external device. For example, programs and data stored in the information storage medium may be supplied to the credit determination system 1 through the reading unit or the input/output unit.

The credit determination system 1 according to the present embodiment determines, for example, the credit of a person whose credit information is not registered in a credit information organization (hereinafter referred to as a target person).

In the following, functions of the credit determination system 1 according to the present embodiment and the processing executed by the credit determination system 1 will be further described.

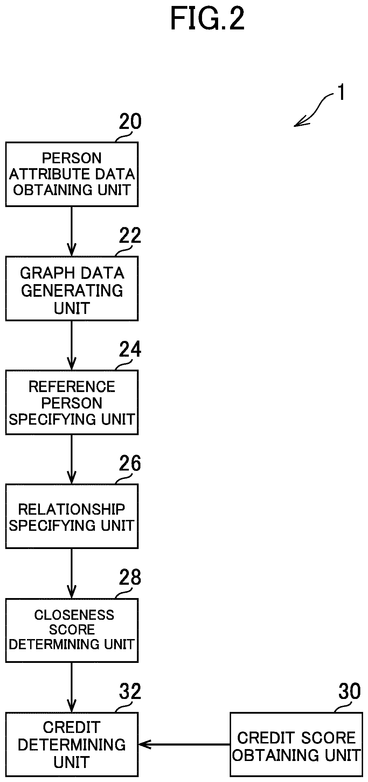

FIG. 2 is a functional block diagram showing an example of functions implemented in the credit determination system 1 according to the present embodiment. In the credit determination system 1 according to the present embodiment, all of the functions shown in FIG. 2 need not be implemented, and functions other than the functions shown in FIG. 2 may be implemented.

As shown in FIG. 2, the credit determination system 1 according to the present embodiment functionally includes, for example, a person attribute data obtaining unit 20, a graph data generating unit 22, a reference person specifying unit 24, a relationship specifying unit 26, a closeness score determining unit 28, a credit score obtaining unit 30, and a credit determining unit 32.

The person attribute data obtaining unit 20 and the credit score obtaining unit 30 are mainly implemented by the communication unit 14. The graph data generating unit 22, the reference person specifying unit 24, the relationship specifying unit 26, and the credit determining unit 32 are mainly implemented by the processor 10. The closeness score determining unit 28 is mainly implemented by the processor 10 and the storage unit 12.

The functions described above are implemented when the processor 10 executes a program that is installed in the credit determination system 1, which is a computer, and includes commands corresponding to the above functions. The program may be supplied to the credit determination system 1 via a computer-readable information storage medium, such as an optical disk, a magnetic disk, a magnetic tape, and a magneto-optical disk, or via the Internet, for example.

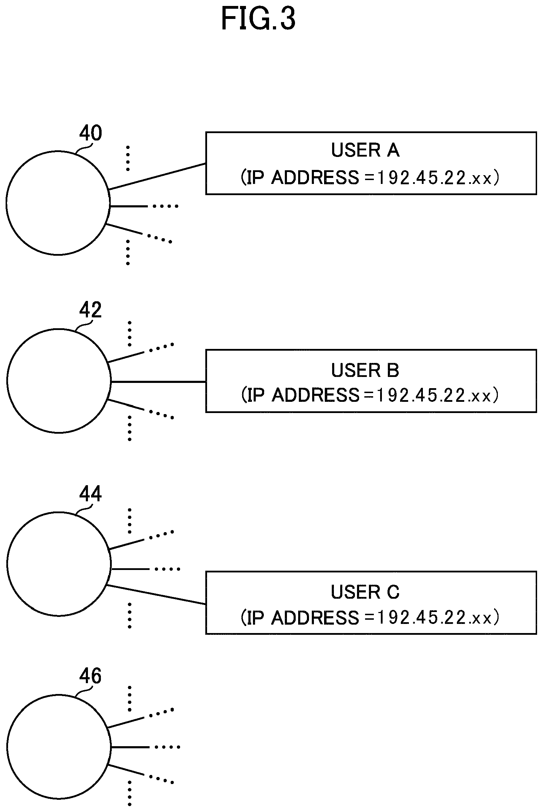

The credit determination system 1 according to the present embodiment is capable of communicating with a plurality of computer systems, such as an electronic commerce system 40, a golf course reservation system 42, a travel reservation system 44, a card management system 46 (see FIGs. 3, 5, 7). Each of the computer systems stores account data, which is information about users who use the computer systems. The credit determination system 1 can access these computer systems to obtain the account data registered in the computer systems.

The account data includes, for example, user IDs, name data, address data, age data, gender data, telephone number data, mobile phone number data, credit card number data, and IP address data.

The user ID is, for example, identification information of the user in the computer system. The name data is, for example, data indicating the name (surname and first name) of the user. The address data is, for example, data indicating the address of the user. If the computer system is the electronic commerce system 40, the address data may indicate the address of the delivery destination of the item purchased by the user. The age data is, for example, data indicating the age of the user. The gender data is, for example, data indicating the gender of the user. The telephone number data is, for example, data indicating the telephone number of the user. The mobile phone number data is, for example, data indicating the mobile phone number of the user. The credit card number data is, for example, data indicating the card number of the credit card used by the user in payment in the computer system. The IP address data is, for example, data indicating the IP address of the computer used by the user (e.g., the IP address of the sender).

In the present embodiment, for example, the person attribute data obtaining unit 20 obtains person attribute data indicating attributes of a plurality of persons including a target person. Examples of the person attribute data include the account data described above. The person attribute data obtaining unit 20 obtains the account data of the persons from each of the systems described above.

In the present embodiment, for example, the graph data generating unit 22 specifies pairs of persons that are related to each other based on respective attributes of the persons. The graph data generating unit 22 may specify a pair of persons that are related to each other based on the person attribute data of a plurality of persons. The graph data generating unit 22 according to the present embodiment corresponds to an example of a pair specifying means described in the claims for specifying a pair of persons related to each other based on respective attributes of a plurality of persons.

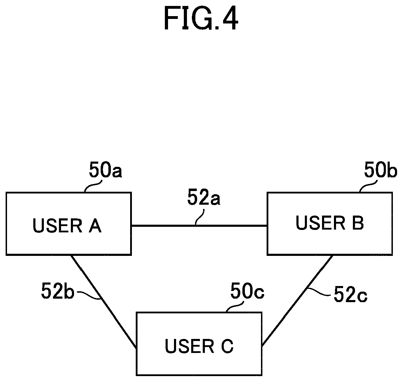

The graph data generating unit 22 generates graph data including, for example, node data 50 associated with a plurality of persons including the target person and link data 52 associated with a pair of persons related to each other (see FIGs. 4, 6, 8, 9).

For example, as shown in FIG. 3, assume that the account data of a user A is registered in the electronic commerce system 40. Further, assume that the account data of a user B is registered in the golf course reservation system 42. Further, assume that account data of a user C is registered in the travel reservation system 44.

Assume that the values of the IP address data of the user A registered in the electronic commerce system 40, the IP address data of the user B registered in the golf course reservation system 42, and the IP address data of the user C registered in the travel reservation system 44 are the same.

In this case, as shown in FIG. 4, the graph data generating unit 22 generates graph data including the node data 50a associated with the user A, the node data 50b associated with the user B, the node data 50c associated with the user C, the link data 52a indicating that the user A is related to the user B, the link data 52b indicating that the user A is related to the user C, and the link data 52c indicating that the user B is related to the user C.

The users with the same IP address are assumed to use the same computer. Accordingly, in the present embodiment, such users are associated with each other.

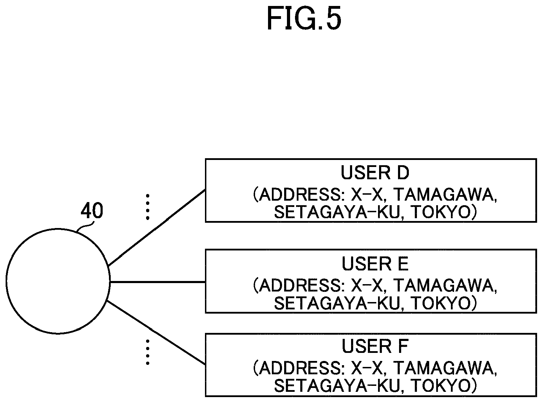

For example, as shown in FIG. 5, assume that the account data of the user D, the user E, and the user F are registered in the electronic commerce system 40.

Assume that the values of the address data of the user D, the address data of the user E, and the address data of the user F registered in the electronic commerce system 40 are the same.

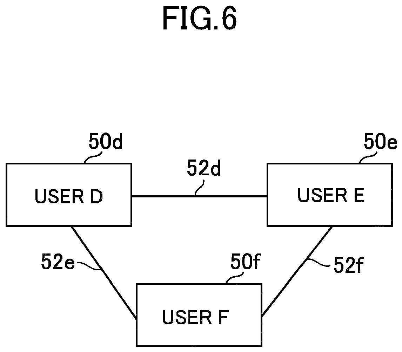

In this case, as shown in FIG. 6, the graph data generating unit 22 generates graph data including the node data 50d associated with the user D, the node data 50e associated with the user E, the node data 50f associated with the user F, the link data 52d indicating that the user D is related to the user E, the link data 52e indicating that the user D is related to the user F, and the link data 52f indicating that the user E is related to the user F.

The users having the same address are assumed to live together. Accordingly, in the present embodiment, such users are associated with each other.

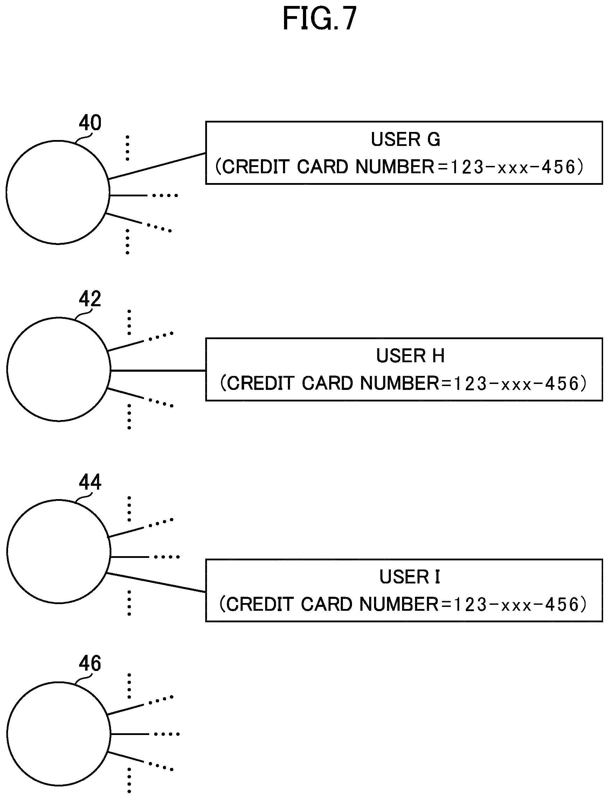

For example, as shown in FIG. 7, assume that the account data of a user G is registered in the electronic commerce system 40. Further, assume that account data of a user H is registered in the golf course reservation system 42. Further, assume that the account data of a user I is registered in the travel reservation system 44.

Assume that the values of the credit card number data of the user G registered in the electronic commerce system 40, the credit card number data of the user H registered in the golf course reservation system 42, and the credit card number data of the user I registered in the travel reservation system 44 are the same.

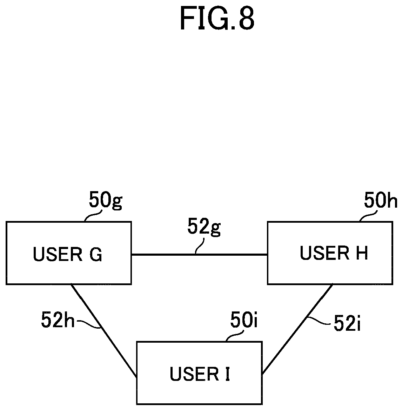

In this case, as shown in FIG. 8, the graph data generating unit 22 generates graph data including the node data 50g associated with the user G, the node data 50h associated with the user H, the node data 50i associated with the user I, the link data 52g indicating that the user G is related to the user H, the link data 52h indicating that the user G is related to the user I, and the link data 52i indicating that the user H is related to the user I.

The users having the same credit card number are assumed to be family members, such as a parent and a child. Accordingly, in the present embodiment, such users are associated with each other.

The basis for determining whether the persons correspond to the pair of persons that are related to each other is not limited to the examples described above.

The link indicated by the link data 52 that associates the persons specified as being related to each other as described above is referred to as an explicit link.

For example, assume that the persons connected to the first person by the explicit link and the persons connected to the second person by the explicit link are common to a predetermined number or more, such as three or more. In this embodiment, for example, the graph data generating unit 22 generates the link data 52 indicating that the first person is related to the second person. The link indicated by the link data 52 thus generated is referred to as an implicit link.

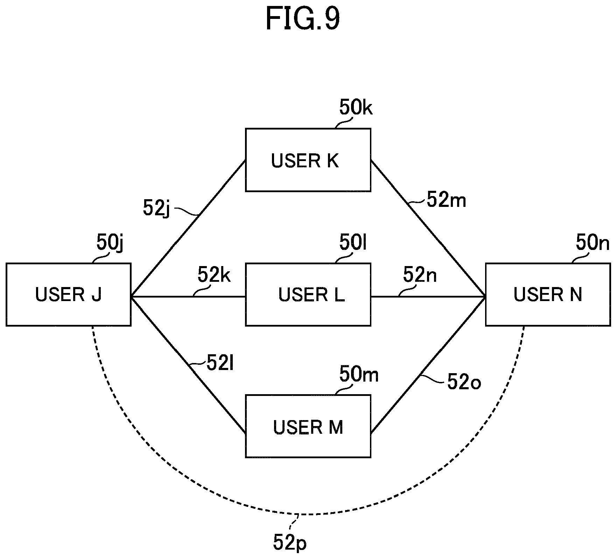

For example, as illustrated in FIG. 9, assume that the node data 50j associated with the user J and the node data 50k associated with the user K are connected to each other by the link data 52j indicating an explicit link. Further, assume that the node data 50j associated with the user J and the node data 501 associated with the user L are connected to each other by the link data 52k indicating an explicit link. Further, assume that the node data 50j associated with the user J and the node data 50m associated with the user M are connected to each other by the link data 521 indicating an explicit link.

Assume that the node data 50k associated with the user K and the node data 50n associated with the user N are connected to each other by the link data 52m indicating the explicit link. Further, assume that the node data 501 associated with the user L and the node data 50n associated with the user N are connected to each other by the link data 52n indicating the explicit link. Further, assume that the node data 50m associated with the user M and the node data 50n associated with the user N are connected to each other by the link data 52o indicating the explicit link.

In this case, the graph data generating unit 22 generates link data 52p (link data 52p indicating an implicit link) indicating that the user J is related to the user N. In this manner, the user N is specified as a person related to the user J.

Further, for example, assume that the persons connected to the first person by the explicit link or the implicit link and the persons connected to the second person by the explicit link or the implicit link are common to a predetermined number or more, such as three or more. In this case, the graph data generating unit 22 may generate link data 52 (link data 52 indicating an implicit link) indicating that the first person is related to the second person.

The graph data generating unit 22 may generate the graph data based on the person attribute data, which is different from the account data.

In this embodiment, for example, the reference person specifying unit 24 specifies a reference person who is related to the target person. The reference person specifying unit 24 may specify, as the reference person, a person who is specified as being related to the target person and a person who is related to the predetermined number or more persons specified as being related to the target person. The reference person specifying unit 24 may specify the reference person from a plurality of persons based on the attribute of the target person and the attributes of the plurality of persons.

For example, the reference person specifying unit 24 may specify, as the reference person for the target person, a person who is associated with the node data 50 connected with the node data 50 associated with the target person by the link data 52 indicating the explicit link or the implicit link.

In this embodiment, for example, the relationship specifying unit 26 specifies the relationship between the target person and the reference person. The relationship specifying unit 26 may specify the relationship between the target person and the reference person based on the account data of the target person and the account data of the reference person. The computer system in which the account data of the target person is registered may be different from the computer system in which the account data of the reference person is registered. For example, the relationship between the target person and the reference person may be specified based on the account data of the target person registered in the electronic commerce system 40 and the account data of the reference person registered in the golf course reservation system 42.

The relationship specifying unit 26 may specify the relationship between the target person and the reference person as a family.

The relationship specifying unit 26 specifies, for example, a pair of the node data 50 connected by the link data 52. Subsequently, the relationship specifying unit 26 generates pair attribute data associated with such a pair based on the person attribute data of two persons associated with the pair.

The pair attribute data includes, for example, IP common flag, address common flag, credit card number common flag, surname identical flag, age difference data, and pair gender data.

For example, the IP common flag indicates whether the value of the IP address data included in the account data of one of the pair is the same as the value of the IP address data included in the account data of the other of the pair. For example, if the values of the IP address data are the same on a given day, the value of the IP common flag may be set to 1, and if the values of the IP address data are different, the value of the IP common flag may be set to 0.

For example, the address common flag indicates whether the value of the address data included in the account data of one of the pair is the same as the value of the address data included in the account data of the other of the pair. For example, if the values of the address data are the same, the value of the address common flag may be set to 1, and if the values of the address data are different, the value of the address common flag may be set to 0.

For example, the credit card number common flag indicates whether the value of the credit card number data included in the account data of one of the pair is the same as the value of the credit card number data included in the account data of the other of the pair. For example, if the values of the credit card number data are the same, the value of the credit card number common flag may be set to 1, and if the values of the credit card number data are different, the value of the credit card number common flag may be set to 0.

For example, the surname identical flag indicates whether the surname indicated by the name data included in the account data of one of the pair is the same as the surname indicated by the name data included in the account data of the other of the pair. For example, if the surnames indicated by the name data are the same, the value of the surname identical flag may be set to 1, and if the surnames indicated by the name data are different, the value of the surname identical flag may be set to 0.

The age difference data indicates, for example, a difference between a value of the age data included in the account data of one of the pair and a value of the age data included in the account data of the other of the pair.

The pair gender data indicates, for example, a combination of a value of gender data included in the account data of one of the pair and a value of gender data included in the account data of the other of the pair.

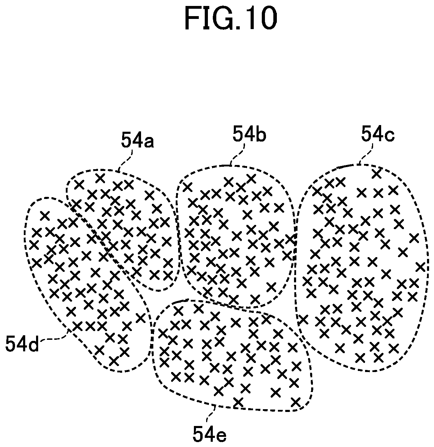

The relationship specifying unit 26 performs clustering using a general clustering method based on the values of the pair attribute data associated with each of the plurality of pairs, thereby classifying the pairs into a plurality of clusters 54 as shown in FIG. 10.

FIG. 10 is a schematic diagram illustrating an example of the plurality of pairs classified into five clusters 54 (54a, 54b, 54c, 54d, 54e). The cross marks shown in FIG. 10 are associated with pairs. Each of the cross marks is located at a position corresponding to the value of the pair attribute data of the pair corresponding to such a cross mark.

In the example in FIG. 10, a plurality of pairs are classified into five clusters 54, although the number of clusters 54 in which a plurality of pairs are classified is not limited to five. For example, a plurality of pairs may be classified into four clusters 54.

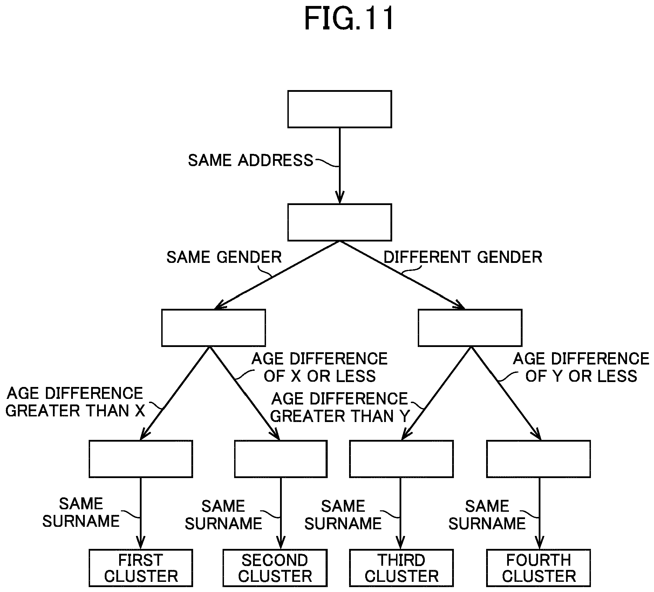

FIG. 11 is a diagram showing an example of visualization of the classification when a plurality of pairs are classified into four clusters 54.

As shown in FIG. 11, the pairs having the same address, the same gender, the age difference greater than X years, and the same surname may be classified into the first cluster. The pairs having the same address, the same gender, the age difference of X years or less, and the same surname may be classified into the second cluster. The pairs having the same address, the different genders, the age difference greater than Y years, and the same surname may be classified into the third cluster. The pairs having the same address, the different genders, the age difference of Y years or less, and the same surname may be classified into the fourth cluster.

In this case, the first cluster is assumed to be the cluster 54 associated with a parent and a child of the same gender, for example. The second cluster is assumed to be the cluster 54 associated with siblings of the same gender, for example. The third cluster is assumed to be the cluster 54 associated with a parent and a child of the different genders, for example. The fourth cluster is assumed to be the cluster 54 associated with a married couple or siblings of different genders, for example.

As described above, the relationship specifying unit 26 may specify the relationship between the target person and the reference person in accordance with the result of clustering based on the values associated with the relationship between the persons. The relationship specifying unit 26 may specify the relationship between the target person and the reference person in accordance with the result of clustering based on at least one of the surname, IP address, address, credit card number, age difference, and gender.

In the present embodiment, for example, the closeness score determining unit 28 determines a closeness score indicating the closeness between the target person and the reference person in accordance with a determination criterion corresponding to the relationship between the target person and the reference person based on an index indicating the strength of the relationship between the target person and the reference person.

The closeness score determining unit 28 may include trained machine learning models respectively associated with the clusters 54 described above. For example, if a plurality of pairs are classified into five clusters 54, the closeness score determining unit 28 may include five machine learning models.

The closeness score determining unit 28 may determine the closeness score indicating the closeness between the target person and the reference person based on the output when data representing an index indicating the strength of the relationship between the target person and the reference person is entered into the trained machine learning model corresponding to the relationship between the target person and the reference person. In this case, the input/output relationship implemented in the trained machine learning model corresponds to the determination criterion described above.

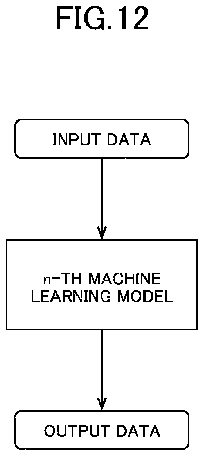

As shown in FIG. 12, the closeness score determining unit 28 may enter input data, which corresponds to a pair classified into the cluster 54 associated with a n-th machine learning model, into the n-th machine learning model. For example, if the closeness score determining unit 28 includes five machine learning models, the value of n described above is any one of integers of 1 to 5. The closeness score determining unit 28 may determine the value of the output data, which is output from the n-th machine learning model in response to the input of the input data, as the value of the closeness score for the pair.

The input data associated with the pair may include, for example, a part or all of the pair attribute data associated with the pair. The input data may include data that is not included in the pair attribute data. For example, the input data may include data indicating a usage history of the electronic commerce system 40, or data obtained by the closeness score determining unit 28 from another information source, such as SNS. More specifically, the input data may include data indicating the number of calls and the number of exchanges of messages per unit period between the members of the pair, the number of gifts one sent to the other, and the number of common friends of the pair, for example.

The types of data included in the input data associated with a pair may be the same or different between the clusters 54 to which the pair belongs. For example, the type of data included in the input data entered into the first machine learning model may be different from the type of data included in the input data entered into the second machine learning model.

In the present embodiment, for example, before the closeness score is determined by the closeness score determining unit 28, the n-th machine learning model is trained using a plurality of given training data sets associated with the n-th machine learning model. The training data sets are prepared in advance so that the closeness score is appropriately determined in the cluster 54 associated with the n-th machine learning model, for example.

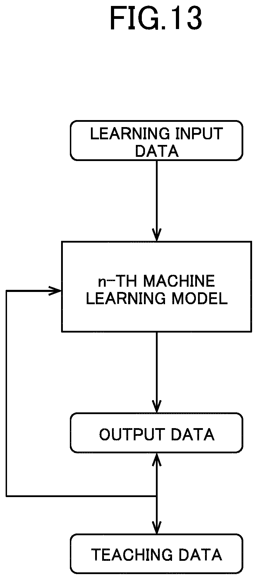

The n-th machine learning model may be trained by weak supervision. For example, as shown in FIG. 13, the training data may include learning input data including data of the same type as the input data entered into the n-th machine learning model and teaching data to be compared with output data that is output from the n-th machine learning model in response to the input of the learning input data.

For example, assume that the closeness score described above has a value of either 0 or 1. For example, if a pair is in the close relationship, 1 is determined as the value of the closeness score of the pair, and if a pair is not in the close relationship, 0 is determined as the value of the closeness score of the pair.

In this case, the teaching data may include data indicating the value of the reasonable closeness scores in the corresponding learning input data and the probability that the value is reasonable.

For example, weakly supervised learning for updating the value of the parameter of the n-th machine learning model may be executed based on the value of the output data output from the n-th machine learning model in response to the input of the learning input data included in the training data and the value of the teaching data included in the training data.

The closeness score does not need to be binary data having a value of either 0 or 1. For example, the closeness score may be a real number value that increases as the pair is in a closer relationship (e.g., a real number value of 0 or more and 10 or less) or an integer value of multiple stages (e.g., an integer value of 1 or more and 10 or less).

The learning method of the machine learning model is not limited to the weakly supervised learning.

A sibling pair will be discussed as a specific example. In this case, the input data associated with such a pair is entered in the trained machine learning model corresponding to the relationship "sibling." For example, in a case where the values of the address data of the pair are the same, the number of gifts one of the pair sent to the other one of the pair is 50, and the number of calls of the pair so far is 1200, training may be performed such that output data having a value of 1 is output. Further, for example, in a case where the values of the address data of the pairs are different, the number of gifts one of the pair sent to the other one of the pair is two, and the number of calls of the pair so far is 30, training may be performed such that output data having a value of 0 is output.

The determination criterion (e.g., threshold value) for determining whether the value of the output data corresponding to the closeness score is 1 or 0 may be different between the machine learning models.

In the present embodiment, for example, the credit score obtaining unit 30 obtains credit score data indicating the credit score of the reference person.

The credit score obtaining unit 30 may access a system of a credit information organization to obtain the credit score data indicating a credit score of the reference person.

The credit score obtaining unit 30 may access the card management system 46 to obtain the credit score data indicating a credit score of the reference person.

In the present embodiment, for example, the credit determining unit 32 determines credit of at least one reference person based on information about the reference person and the closeness score between the reference person the target person.

Examples of the information about the reference person include credit score data indicating the credit score of the reference person obtained by the credit score obtaining unit 30.

The credit determining unit 32 may determine a credit score of the target person as an example of the credit of the target person. For example, the credit determining unit 32 may determine the weighted average of the credit scores according to the closeness scores as the credit score of the target person.

For example, assume that there are m reference persons for a target person. In this case, a value p may be calculated by summing the product of the values of the credit score data of the m reference persons and the values of the closeness scores associated with pairs of the target person and each of the m reference persons. Further, a value q may be calculated by summing the values of the closeness scores associated with pairs of the target person and each of the m reference persons. The value obtained by dividing the value p by the value q may be determined as the credit score of the target person.

The credit determining unit 32 does not need to determine the credit of the target person based on the credit scores of the reference person. For example, the credit determining unit 32 may determine the credit of the target person based on the revenue of the reference person, the recognition of the reference person, and the demographics.

The credit of the target person determined by the credit determining unit 32 is not limited to the credit score of the target person. For example, the credit determining unit 32 may determine the credit limit of the target person. Further, for example, the credit determining unit 32 may determine whether to permit a new user registration for any member service, or to permit post-payment of any Internet shopping or flea market service.

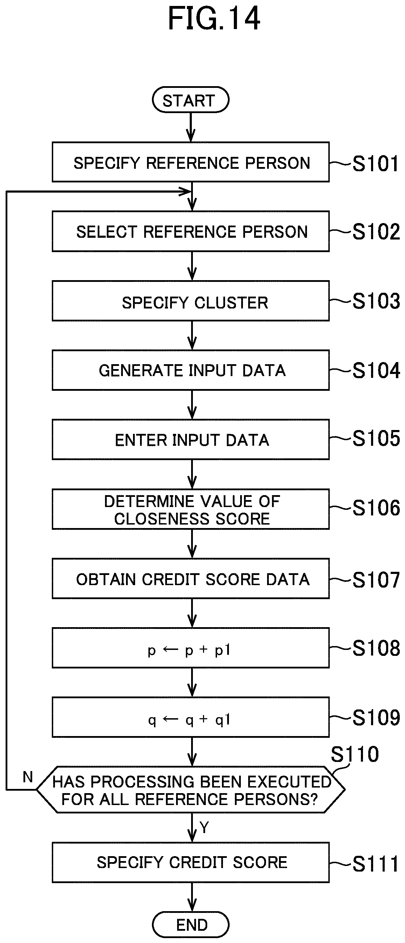

Referring to the flow chart shown in FIG. 14, an example of the processing for determining the credit of a target person performed by the credit determination system 1 according to the present embodiment will be described. In the following example, assume that graph data for a plurality of persons including the target person is already generated, and the clusters 54 associated with a plurality of pairs are specified. Further, assume that the machine learning models respectively associated with the clusters 54 are already trained. Further, assume that 0 is set as the initial value of the value p and the initial value of the value q.

First, the reference person specifying unit 24 specifies, as a reference person, a person associated with the node data 50 connected by an explicit link or an implicit link to the node data 50 corresponding to the target person (S101). In this example, assume that at least one reference person is specified, for example.

Subsequently, the relationship specifying unit 26 selects a reference person for whom the processing shown in S103 to S109 has not yet been executed from among the reference persons specified in the processing shown in S101 (S102).

The relationship specifying unit 26 then specifies the cluster 54 corresponding to the pair of the target person and the reference person selected in the processing shown in S102 (S103).

The closeness score determining unit 28 generates input data corresponding to the pair of the target person and the reference person selected in the processing shown in S102 (S104).

The closeness score determining unit 28 enters the input data generated in the processing in S104 into the trained machine learning model associated with the cluster 54 specified in the processing in S103 (S105).

The closeness score determining unit 28 determines a value of the closeness score corresponding to the pair of the target person and the reference person based on the output data from the machine learning model in response to the input executed in the processing in S105 (S106).

The credit score obtaining unit 30 obtains the credit score data of the reference person (S107).

The credit determining unit 32 adds the product p1 of the value of the credit score data obtained in the processing in S107 and the value of the closeness score determined in the processing in S106 to the value p (S108).

The credit determining unit 32 adds the value q1 of the closeness score determined in the processing shown in S106 to the value q (S109).

The relationship specifying unit 26 confirms whether the processing shown in S103 to S109 has been executed for all of the reference persons specified in the processing in S101 (S110) .

If the processing shown in S103 to S109 has not been executed for all of the reference persons specified in the processing in S101 (S110:N), the processing returns to S102.

If the processing shown in S103 to S109 has been executed for all of the reference persons specified in the processing in S101 (S110:Y), the credit determining unit 32 specifies the value obtained by dividing the value p by the value q as the credit score of the target person (S111), and the processing shown in this example is terminated.

In this manner, according to the present embodiment, it is possible to accurately determine the credit of a person whose credit information is not known.

The present embodiment can also be used to determine credit of a new target person for whom the corresponding node data 50 is not included in the graph data. For example, based on the person attribute data of a new target person, node data 50 corresponding to the target person and at least one piece of link data 52 connected to such node data 50 may be generated. A person connected to the node data 50 corresponding to the target person by the link data 52 may be specified as a reference person of the target person.

For each of the at least one specified reference person, pair attribute data corresponding to a pair of such a reference person and the target person may be generated. The cluster 54 corresponding to the relationship between the reference person and the target person may be specified based on the pair attribute data and the result of clustering that has already been performed.

A trained machine learning model corresponding to each of the clusters 54 specified for each of the at least one specified reference person may be specified. The closeness score for the pair of the reference person and the target person may be determined based on the output from the machine learning model when the input data corresponding to such a pair is entered into the machine learning model.

As described above, the credit of the new target person may be determined based on a closeness score and a credit score of each reference person.

The present invention is not limited to the embodiment described above.

For example, the credit determining unit 32 may perform a first determination to determine credit of a target person based on information about the target person. In the first determination, the credit of the target person may be determined based only on the information about the target person without using information about the persons other than the target person, for example, the information about the reference person described above.

If the credit of the target person determined by the first determination is equal to or less than a predetermined level (e.g., the value of the credit score of the target person is equal to or less than a predetermined value), the credit determining unit 32 may perform a second determination to redetermine the credit of the target person based on the information about at least one reference person as described above.

If the credit of the target person cannot be determined in the first determination, the credit determining unit 32 may perform the second determination of redetermining the credit of the target person based on the information about at least one reference person as described above.

The specific character strings, numerical values, and specific character strings and numerical values in the drawings described above are illustrative only, and are not limited to these character strings and numerical values.

## Claims

1. A credit determination system that determines credit of a target person, comprising:
relationship specifying means for specifying a relationship between the target person and a reference person;
closeness score determining means for determining a closeness score indicating closeness between the target person and the reference person in accordance with a determination criterion corresponding to the relationship between the target person and the reference person based on an index indicating strength of the relationship between the target person and the reference person; and
credit determining means for determining credit of the target person based on information about the at least one reference person and the closeness score determined for the reference person.

2. The credit determination system according to claim 1, wherein
the closeness score determining means determines the closeness score indicating the closeness between the target person and the reference person based on an output obtained when data indicating the index is entered into a trained machine learning model corresponding the relationship between the target person and the reference person.

3. The credit determination system according to claim 1 or 2, wherein
the relationship specifying means specifies the relationship between the target person and the reference person based on account data of the target person registered in a first computer system and account data of the reference person registered in a second computer system.

4. The credit determination system according to any one of claims 1 to 3, further comprising:
pair specifying means for specifying a pair of persons related to each other based on respective attributes of a plurality of persons; and
reference person specifying means for specifying, as the reference person, a person who is specified as related to the target person and a person who is related to a predetermined number or more of persons related to the target person.

5. The credit determination system according to any one of claims 1 to 4, wherein
the relationship specifying means specifies the relationship between the target person and the reference person as a family.

6. The credit determination system according to any one of claims 1 to 5, wherein
the credit determining means determines a credit score of the target person.

7. The credit determination system according to any one of claims 1 to 6, wherein
the relationship specifying means specifies the relationship between the target person and the reference person based on a result of clustering based on a value associated with a relationship between persons.

8. The credit determination system according to claim 7, wherein
the relationship specifying means specifies the relationship between the target person and the reference person based on a result of clustering based on at least one of a surname, an IP address, an address, a credit card number, an age difference, or a gender.

9. The credit determination system according to any one of claims 1 to 8, wherein
the credit determining means executes a first determination that determines credit of the target person based on information about the target person, and
in a case where the credit of the target person determined by the first determination is equal to or less than a predetermined level or the credit of the target person is not determined by the first determination, the credit determining means executes a second determination that redetermines the credit of the target person based on information about the at least one reference person.

10. A credit determination method for determining credit of a target person, comprising:
specifying a relationship between the target person and a reference person;
determining a closeness score indicating closeness between the target person and the reference person in accordance with a determination criterion corresponding to the relationship between the target person and the reference person based on an index indicating strength of the relationship between the target person and the reference person; and
determining credit of the target person based on information about the at least one reference person and the closeness score determined for the reference person.

11. A program for causing a computer that determines credit of a target person to execute:
specifying a relationship between the target person and a reference person;
determining a closeness score indicating closeness between the target person and the reference person in accordance with a determination criterion corresponding to the relationship between the target person and the reference person based on an index indicating strength of the relationship between the target person and the reference person; and
determining credit of the target person based on information about the at least one reference person and the closeness score determined for the reference person.
